# EUROPÄISCHE PATENTANMELDUNG

(11) **EP 4 760 113 A1**
(43) Veröffentlichungstag der Anmeldung: **17.06.2026**
(21) Anmeldenummer: 24219618.6
(22) Anmeldetag: 12.12.2024
(51) Int. Cl.: F16B 13/08

(54) **VERBINDUNGSKIT ZUM VERBINDEN EINES ERSTEN WERKSTÜCKS MIT EINEM ZWEITEN WERKSTÜCK SOWIE VERFAHREN**

(71) Anmelder: Dlugosz, Artur, 42653 Solingen (DE)
(72) Erfinder: Dlugosz, Artur, 42653 Solingen (DE)
(74) Vertreter: Michalski Hüttermann & Partner mbB

(57) **Zusammenfassung**

Es wird ein Verbindungskit (100) zum Verbinden eines ersten Werkstücks (104a) mit einem zweiten Werkstück (104b), mit einem ersten Verbinder (102a) und einem zweiten Verbinder (102b) angegeben, wobei der erste Verbinder (102a) und der zweite Verbinder (102b) jeweils einen Fixierabschnitt (106) zum Fixieren der Verbinder (102a, 102b) aufweisen und die Verbinder (102a, 102b) zumindest bereichsweise in jeweils einer Bohrung (116) der Werkstücke (104a, 104b) angeordnet sind, wobei ferner der Fixierabschnitt (106) des ersten Verbinders (102a) in einer Bohrung (116) des ersten Werkstücks (104a) angeordnet ist und der Fixierabschnitt (106) des zweiten Verbinders (102b) in einer Bohrung (116) des zweiten Werkstücks (104b) angeordnet ist und die Verbinder (102a, 102b) gegenseitig verklemmt sind

## Beschreibung

Die Erfindung betrifft ein Verbindungskit zum Verbinden eines ersten Werkstücks mit einem zweiten Werkstück. Ferner betrifft die Erfindung ein Verfahren zum Verbinden eines ersten Werkstücks mit einem zweiten Werkstück.

Die Verbindung zweier Werkstücke ist ein grundlegender Aspekt zahlreicher technischer und handwerklicher Anwendungen. Insbesondere bei Werkstücken aus Holz spielen sowohl die Verbindungstechnologie als auch die eingesetzten Verbindungselemente eine entscheidende Rolle, um eine stabile, langlebige und funktionsgerechte Verbindung zu gewährleisten. Dabei stehen verschiedene Methoden zur Verfügung, die je nach Anwendungsfall spezifische Vor- und Nachteile mit sich bringen.

Eine häufig genutzte Möglichkeit sind Klebeverbindungen, die eine großflächige Kraftübertragung erlauben und sich gut an unterschiedliche Holzarten anpassen lassen. Allerdings sind solche Verbindungen meist irreversibel und erfordern eine sorgfältige Vorbereitung der Oberflächen. Zudem sind sie empfindlich gegenüber Feuchtigkeit und Temperaturschwankungen, was ihre Einsatzmöglichkeiten einschränkt.

Mechanische Verbindungselemente wie Schrauben, Nägel, Bolzen oder Dübel bieten den Vorteil einer schnellen und oftmals reversiblen Montage. Sie neigen jedoch bei wiederholter Belastung zur Lockerung und erfordern präzise Vorbohrungen, die die Struktur des Werkstücks schwächen können.

Traditionelle Holzverbindungen wie Zapfen oder Fingerzinken überzeugen durch hohe Stabilität und ansprechende Optik, sind jedoch aufwändig herzustellen und verlieren unter Einfluss wechselnder Umgebungsbedingungen, wie Feuchtigkeit, an Festigkeit. Hybridverbindungen, die Klebstoffe und mechanische Elemente kombinieren, versuchen, die Vorteile beider Ansätze zu vereinen, sind jedoch kosten- und montageintensiv.

Die bekannten Verbindungstechnologien weisen somit Einschränkungen hinsichtlich Beständigkeit, Flexibilität und Anwendungskomfort auf. Insbesondere weisen bekannte Verbindungstechnologien Nachteile hinsichtlich der Einfachheit der Verbindung ohne Einsatz von Werkzeug auf.

Der Erfindung liegt daher die Aufgabe zugrunde, ein Verbindungskit sowie ein Verfahren anzugeben, mit deren Hilfe zwei Werkstücke einfach und zuverlässig miteinander verbunden werden können.

Mit Blick auf das Verbindungskit wird die Aufgabe erfindungsgemäß gelöst durch ein Verbindungskit mit den Merkmalen des Anspruchs 1. Mit Blick auf das Verfahren wird die Aufgabe erfindungsgemäß gelöst durch ein Verfahren mit den Merkmalen des Anspruchs 14. Bevorzugte Ausgestaltungen, Weiterbildungen und Varianten sind Gegenstand der Unteransprüche.

Die im Hinblick auf das Verbindungskit aufgeführten Vorteile und bevorzugten Ausgestaltungen sind sinngemäß auf das Verfahren zu übertragen und umgekehrt.

Das erfindungsgemäße Verbindungskit ist zum Verbinden eines ersten Werkstücks mit einem zweiten Werkstück ausgebildet. Hierzu weist das Verbindungskit einen ersten Verbinder und einen zweiten Verbinder auf, wobei der erste Verbinder und der zweite Verbinder jeweils einen Fixierabschnitt zum Fixieren der Verbinder in den Werkstücken aufweisen.

Die Verbinder sind zumindest bereichsweise in jeweils einer Bohrung der Werkstücke angeordnet, wobei ferner der Fixierabschnitt des ersten Verbinders in einer Bohrung des ersten Werkstücks angeordnet ist und der Fixierabschnitt des zweiten Verbinders in einer Bohrung des zweiten Werkstücks angeordnet ist. Ferner sind die beiden Verbinder gegenseitig verklemmt.

Durch die gegenseitige Verklemmung der beiden Verbinder ist sichergestellt, dass die jeweiligen Fixierbereiche in der jeweiligen Bohrung des Werkstücks einsitzen und zudem eine Verbindung mit dem Werkstück eingehen. Bei der Verbindung kann es sich beispielsweise um eine kraftschlüssige und/oder formschlüssige und/oder reibschlüssige Verbindung handeln. Mit anderen Worten verbinden die Fixierabschnitte die jeweiligen Verbinder mit dem jeweiligen Werkstück und die gegenseitige Klemmung verbindet die beiden Verbinder miteinander, so dass die beiden Werkstücke somit auf einfache Weise miteinander verbunden sind. Bevorzugt werden die beiden Verbinder jeweils händisch, also ohne Werkzeug, in die Bohrungen der Werkstücke eingesetzt und die beiden Werkstücke ebenfalls bevorzugt händisch, also auch ohne Werkzeug, miteinander verpresst, beispielsweise indem die beiden Werkstücke von Hand zusammengedrückt werden.

Bei dem ersten Werkstück und dem zweiten Werkstück kann es sich vorzugsweise um Werkstücke aus dem gleichen Material, beispielsweise aus Holz, handeln. Alternativ können die beiden Werkstücke jedoch auch unterschiedliche Materialien aufweisen oder aus unterschiedlichen Materialien bestehen. Beispielsweise ist es somit mit dem Verbindungskit auch ermöglicht, Werkstücke unterschiedlicher Materialien auf einfache Weise und zuverlässig miteinander zu verbinden. Es kann sich bei dem ersten Werkstück somit beispielsweise um ein Werkstück aus Holz und bei dem zweiten Werkstück um ein Werkstück auf Beton oder Metall handeln.

Durch das erfindungsgemäße Verbindungskit ist eine einfache, schnelle sowie insbesondere unsichtbare Verbindung der beiden Werkstücke realisiert. Des Weiteren werden keine Werkzeuge benötigt, was die Montage somit vereinfacht und insbesondere auch einen Zeitvorteil gegenüber anderen bekannten Verbindungen herstellt. Durch das erfindungsgemäße Verbindungskit ist ferner auch eine Vor-Kopf-Montage möglich.

Gemäß einer Ausführungsform erstreckt sich der Fixierabschnitt eines jeden Verbinders über maximal die Hälfte der Länge des jeweiligen Verbinders. Insbesondere erstreckt sich der Fixierabschnitt über maximal ein Drittel, weiterhin bevorzugt über maximal ein Viertel der Länge des jeweiligen Verbinders.

In einer weiteren Ausführungsform erstreckt sich der Fixierabschnitt in Umfangsrichtung über maximal die Hälfte des Gesamtumfangs des jeweiligen Verbinders. Vorzugsweise erstreckt sich der Fixierabschnitt in Umfangsrichtung über maximal ein Drittel, weiter bevorzugt über maximal ein Viertel des Gesamtumfangs des jeweiligen Verbinders.

Durch die beiden vorgenannten Ausführungsformen ist zum einen eine einfache Ausgestaltung der Verbinder realisiert und zum anderen ist sichergestellt, dass die Fixierabschnitte eine ausreichende Sicherung und einen ausreichenden Halt der Verbinder innerhalb der Bohrungen des Werkstücks gewährleisten.

Ferner kann es von Vorteil sein, wenn der erste Verbinder und der zweite Verbinder jeweils eine Anschlagfläche, insbesondere eine plane Anschlagfläche, aufweisen, wobei die Anschlagflächen der Verbinder aneinander anliegen, um die Verbinder in den Bohrungen zu verklemmen. Mit anderen Worten sind die Verbinder im Querschnitt betrachtet halbkreisförmig ausgebildet. Die Anschlagfläche ist vorzugsweise an einer dem Fixierbereich gegenüberliegenden Seite des Verbinders angeordnet. D.h. der Verbinder weist im Querschnitt betrachtet an einer Seite den Fixierbereich auf, der sich über maximal die Hälfte des Gesamtumfangs erstreckt, und auf der anderen Seite die Anschlagfläche.

Bevorzugt liegen die Anschlagflächen der Verbinder aneinander an, wenn die Verbinder in den Bohrungen der Werkstücke angeordnet sind. Durch das Anliegen an den Anschlagflächen werden die Fixierbereiche in das Werkstück bzw. in Richtung des Werkstücks gedrückt, sodass die Fixierbereiche eine ausreichende Fixierung ausüben. Mit anderen Worten sind die beiden Verbinder im in den Bohrungen angeordneten Zustand durch die und mit Hilfe der Anschlagflächen gegeneinander gekontert. Es kann somit auf andere insbesondere auf zusätzliche Teile zur Realisierung und Sicherung der Fixierung verzichtet werden.

Gemäß einer Ausführungsform weisen die beiden aneinander anliegenden Verbinder einen Gesamtdurchmesser auf, der um 0,1mm bis 0,3mm, insbesondere um 0,2mm größer ist als ein Durchmesser der jeweiligen Bohrungen der Werkstücke. Unter dem Begriff "aneinander anliegende Verbinder" kann im Sinne dieser Anmeldung verstanden werden, dass die Anschlagflächen der Verbinder aneinander anliegen und somit die Verbinder in den Bohrungen verklemmen. Unter dem Begriff "Gesamtdurchmesser" kann im Sinne dieser Anmeldung der Durchmesser verstanden werden, den zwei aneinander anliegende Verbinder aufweisen, wenn sich diese in den Bohrungen der Werkstücke befinden.

Durch den minimal größeren Durchmesser der beiden Verbinder in Bezug zu dem Durchmesser der Bohrungen, ist eine zuverlässige und sichere Klemm- bzw. Presspassung und dadurch eine sichere und starke Verbindung der beiden Werkstücke durch die Verbinder erreicht. Hierbei kann hinsichtlich möglicher Presspassungen auf die geltenden Passmaßtabellen sowie hierzu einschlägige Normen verwiesen werden.

Weiterhin alternativ oder ergänzend kann eine Presspassung auch derart realisiert werden, dass zumindest eins der beiden Werkstücke durch einen Kälteeintrag abgekühlt wird, wodurch sich das Material des zumindest einen Werkstücks zusammenzieht.

Vorn Vorteil kann es sein, wenn der Fixierabschnitt mehrere Fixierelemente aufweist. Vorzugsweise weist der Fixierbereich zwischen 4 und 15, weiter bevorzugt zwischen 3 und 12 und insbesondere zwischen 8 und 10 Fixierelemente auf.

Durch die angegebene Anzahl an Fixierelementen können die Verbinder einfach aufgebaut und gefertigt werden. Gleichzeitig reichen diese Fixierelemente jedoch aus, um eine sichere Fixierung der Verbinder und damit auch der beiden Werkstücke untereinander sicherzustellen.

Gemäß einer Weiterbildung weisen die mehreren Fixierelemente unterschiedliche Längen und/oder Abstände zueinander auf. Mit anderen Worten kann sich der Abstand, in dem die Fixierelemente innerhalb des Fixierabschnitts angeordnet sind von Fixierelement zu Fixierelement unterscheiden. Beispielsweise können die Fixierelemente, die an einem Ende des Fixierabschnitts angeordnet sind einen größeren Abstand zueinander aufweisen als die Fixierelemente, die an dem anderen Ende des Fixierabschnitts angeordnet sind. Hierdurch kann das Einführen der Verbinder in die Bohrungen erleichtert werden.

Unter dem Begriff "Länge des Fixierelements" kann im Sinne dieser Anmeldung eine radiale Ausdehnung des Fixierelements verstanden werden. Mit anderen Worten beschreibt die Länge des Fixierelements, wie weit sich dieses in radialer Richtung vom Grundkörper des Verbinders weg erstreckt.

In einer Ausführungsform sind die Fixierelemente als scharfkantige Flanken und/oder als Dornen ausgebildet. Unter dem Begriff "scharfkantige Flanken" können im Sinne dieser Anmeldung (vor-)dachartige Vorsprünge verstanden werden, die bei dem bereits erwähnten Anliegen der Anschlagfläche und Anordnen der Verbinder in den Bohrungen der Werkstücke in das jeweilige Werkstück eindringen und somit eine Fixierung, insbesondere gegen ein Herausziehen des Verbinders aus der Bohrung, sicherstellen. Derartige Fixierelemente eignen sich besonders für "weichere Materialien" wie beispielsweise Holz oder Kunststoff.

Ferner ist ein Winkel der Fixierelemente, insbesondere ein Winkel der als scharfkantige Flanken ausgebildeten Fixierelemente derart gewählt, dass sich der Verbinder beim Verbinden der beiden Werkstücke in die jeweilige Bohrung einnistet, um die beiden Werkstücke besser und stärker gegeneinander zu pressen.

Alternativ sind auch andere Geometrien denkbar, die eine Fixierung der Verbinder in vorstehend genannter Art ermöglichen.

Die Fixierelemente können hierbei vorzugsweise monolithisch, also einteilig, an dem Verbinder ausgeformt sein. Mit anderen Worten ist der Verbinder mit den Fixierelementen bevorzugt monolithisch ausgebildet und weist somit keine anderen Teile auf. Dies unterstreicht den einfachen Aufbau des Verbinders. Alternativ hierzu kann zumindest ein Teil der Fixierelemente, vorzugsweise alle Fixierelemente, an dem Verbinder angeordnet sein, beispielsweise angeklebt oder angeschweißt oder angesteckt sein. Diese alternative Ausführungsform ermöglicht beispielsweise einen Austausch der Fixierelemente bei gleichzeitiger Wiederverwendbarkeit des restlichen Verbinders bei Verschleiß der Fixierelemente.

Alternativ oder ergänzend weist der Fixierabschnitt gemäß einer Ausführungsform eine Beschichtung, insbesondere eine Gummi- und/oder Polyurethan-Beschichtung auf. Durch die Beschichtung kann hierbei ebenfalls eine Fixierung des Verbinders innerhalb der Bohrung sichergestellt werden und dieser somit gegen ein Herausziehen gesichert werden, was die Verbindung zwischen den beiden Werkstücken realisiert. Diese Ausführungsform eignet sich beispielsweise für "härtere Materialien" wie z.B. Beton oder Metall.

Gemäß einer Weiterbildung kann der Fixierabschnitt auch eine Aussparung aufweisen, in die zumindest ein Fixierelement, insbesondere ein als Gummieinsatz ausgebildetes Fixierelement, eingesetzt ist.

Es versteht sich von selbst, dass die vorstehend erwähnten Fixierelemente und die damit versehenen Verbinder auch untereinander in Kombination eingesetzt werden können, um Werkstücke unterschiedlicher Materialien miteinander zu verbinden. Beispielsweise kann ein Verbindungskit einen Verbinder mit einem Fixierabschnitt aufweisen, der mit Dornen versehen ist und ferner einen Verbinder aufweisen, der mit einem Fixierabschnitt ausgestaltet ist, der eine Gummibeschichtung aufweist. Mit diesem Verbindungskit können dann beispielsweise ein Werkstück aus Holz und ein Werkstück aus Beton miteinander auf einfache Weise verbunden werden. Hierbei ist der Fixierabschnitt, der die Dornen aufweist in der Bohrung des Werkstückes aus Holz angeordnet und der Verbinder, der den Fixierabschnitt mit der Gummibeschichtung aufweist, in der Bohrung des Beton-Werkstücks angeordnet. Somit sind die einzelnen Verbinder des Verbindungskits optimal auf die miteinander zu verbindenden Werkstücke anpassbar.

Gemäß einer praktischen Ausführungsform weisen der erste Verbinder und der zweite Verbinder jeweils einen Anschlag auf. Der Anschlag dient dazu, eine Eindringtiefe in die Bohrungen zu begrenzen. Der Anschlag kann beispielsweise in einer einfachen Ausführungsform als eine in Umfangsrichtung umlaufende Verdickung oder Flanke ausgebildet sein.

Um eine reversible Verbindung zwischen den beiden Werkstücken zu realisieren, kann es von Vorteil sein, wenn der erste Verbinder und/oder der zweite Verbinder ein Sicherungselement aufweisen bzw. aufweist. Bei dem Sicherungselement kann es sich beispielsweise um ein Sicherungsplättchen handeln, welches zwischen den beiden Anschlagflächen der Verbinder angeordnet ist. Zum Lösen der Verbinder und damit der Verbindung wird das Sicherungsplättchen entfernt und die Verbindung verliert dadurch ihre Klemmkraft, so dass die Verbindung "gelockert" wird und entfernt werden kann, um die beiden Werkstücke voneinander zu trennen. Alternativ hierzu kann es sich bei dem Sicherungselement um einen Sicherungsbolzen handeln. Weiterhin bevorzugt kann das als Sicherungsplättchen oder als Sicherungsbolzen ausgebildete Sicherungselement magnetisch, insbesondere elektromagnetisch, ausgebildet sein und zum Lösen der Verbindung mit entsprechenden magnetischen Werkzeugen entfernt werden.

Gemäß einer Weiterbildung weist der erste Verbinder und/oder der zweite Verbinder an einem Ende, das dem Fixierabschnitt in Längsrichtung gegenüber liegt, eine Verjüngung auf. Unter dem Begriff "Verjüngung" kann im Sinne dieser Anmeldung eine Reduzierung des Durchmessers in dem erwähnten Abschnitt des Verbinders verstanden werden. Durch die so abgeschrägte Kontur des Verbinders lässt sich dieser einfacher in die jeweilige Bohrung des Werkstücks einführen, was die Montage vereinfacht.

Gemäß einer weiteren Ausführungsform weist der erste Verbinder und/oder der zweite Verbinder eine Verdrehsicherung auf. Die Verdrehsicherung ist vorzugsweise als eine Art Flosse ausgebildet, die sich in Richtung der Längsrichtung erstreckt des Verbinders erstreckt und an der Seite des Verbinders angeordnet ist, die der Anlagefläche im Querschnitt betrachtet gegenüberliegt. Weiter vorzugsweise greift die Verdrehsicherung beim in der Bohrung angeordneten Zustand des Verbinders in das Material des jeweiligen Werkstücks ein, um ein Verdrehen des Verbinders zu verhindern. Die Verdrehsicherung kann weiter bevorzugt auch als Drehmomentstütze dienen.

In einer Ausführungsform weist der erste Verbinder und/oder der zweite Verbinder ein Metall auf. Insbesondere ist der erste Verbinder und/oder der zweite Verbinder aus einem Metall hergestellt. Dies ermöglicht zum einen eine einfache Herstellung der Verbinder und zum anderen eine stabile Ausgestaltung der Verbinder. Je nach Anwendung und Einsatzgebiet können die Verbinder unterschiedliche Materialien und/oder Metalle und/oder Metalllegierungen aufweisen oder aus derartigen Materialien hergestellt sein. Nichteinschränkende Beispiele für derartige Materialien sind Edelstahl, Titan oder Hart-Kunststoffe.

Das Verfahren zum Verbinden eines ersten Werkstücks mit einem zweiten Werkstück mittels eines Verbindungkits weist die folgenden Schritte auf:
a) Versehen des ersten Werkstücks und des zweiten Werkstücks mit jeweils einer Bohrung;
b) Einlegen eines ersten Verbinders in die Bohrung des ersten Werkstücks, wobei ein Fixierabschnitt des ersten Verbinders in der Bohrung angeordnet wird;
c) Anordnen eines zweiten Verbinders in der Bohrung des ersten Werkstücks derart, dass eine Anschlagfläche des zweiten Verbinders und eine Anschlagfläche des ersten Verbinders aneinander anliegen;
d) Anordnen des zweiten Werkstücks auf dem ersten Verbinder sowie dem zweiten Verbinder derart, dass ein Fixierabschnitt des zweiten Verbinders in der Bohrung des zweiten Werkstücks angeordnet wird;
e) Zusammendrücken der beiden Werkstücke, so dass durch die innerhalb der Bohrungen angeordneten Fixierabschnitte und das Anliegen der Anschlagflächen eine Klemmpassung zur Fixierung der beiden Werkstücke miteinander ausgebildet wird.

Bei dem in dem Verfahren eingesetzten Verbindungskit handelt es sich bevorzugt um das vorstehend beschriebene Verbindungskit.

Gemäß einer Ausführungsform des Verfahrens wird Schritt e) unter Zuhilfenahme eines Kraftverstärkers, insbesondere eines mechanischen Kraftverstärkers, ausgeführt wird. Bei dem Kraftverstärker kann es sich beispielsweise - jedoch nicht einschränkend - im einfachsten Fall um einen Hammer und weiterhin z.B. um eine Druckluft- oder Hydraulikpresse handeln. Alternativ können auch geeignete Maschinen und deren Werkzeug, z. B. die Gabel eines Gabelstaplers oder die Schaufel einer Baumaschine verwendet werden.

Ausführungsbeispiele der Erfindung werden nachfolgend anhand der Figuren näher erläutert. Diese zeigen in teilweise stark vereinfachter Darstellung:
- Fig. 1a: eine perspektivische Darstellung eines Verbinders eines erfindungsgemäßen Verbindungskits;
- Fig. 1b: eine perspektivische Darstellung des erfindungsgemäßen Verbindungskits gemäß einer ersten Ausführungsform;
- Fig. 2a-c: eine Seitenansicht verschiedener Stadien während des Verbindungsvorgangs zweier Werkstücke mit Hilfe des erfindungsgemäßen Verbindungskits;
- Fig. 3: eine schematische Seitenansicht eines vergrößerten Fixierbereichs eines erfindungsgemäßen Verbinders gemäß einer zweiten Ausführungsform; und
- Fig. 4: eine schematische Seitenansicht eines vergrößerten Fixierbereichs eines erfindungsgemäßen Verbinders gemäß einer dritten Ausführungsform.

In den Figuren sind gleiche bzw. gleichwirkende Bauteile stets mit den gleichen Bezugszeichen dargestellt.

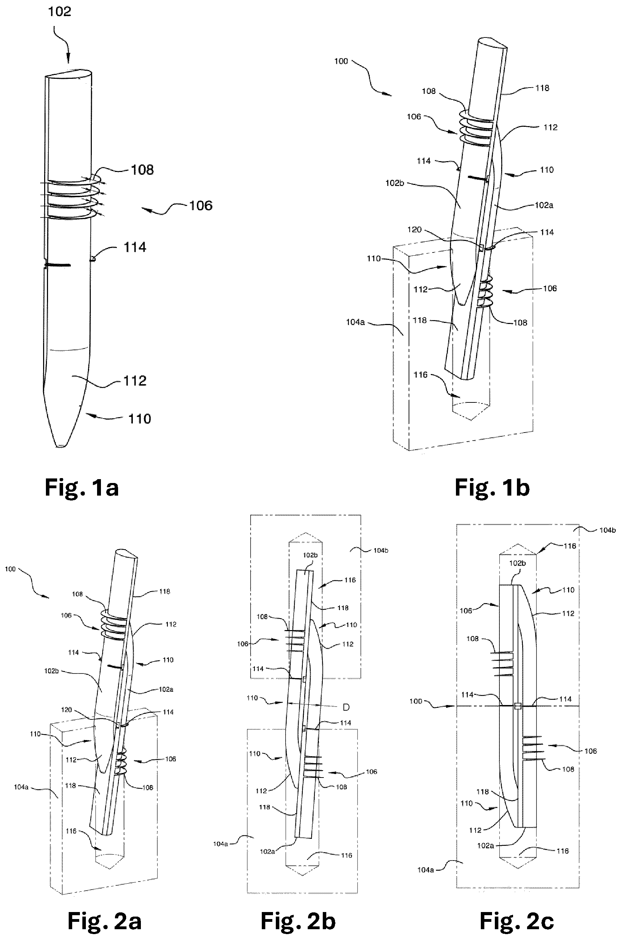

In den Fig. 1a und 1b ist ein Verbindungskit 100 (siehe Fig. 1b) sowie ein Verbinder 102 im Detail (Fig. 1a) in einer perspektivischen Darstellung dargestellt.

Das Verbindungskit 100 dient einem Verbinden eines ersten Werkstücks 104a mit einem zweiten Werkstück 104b (siehe Fig. 2b, 2c). Das Verbindungskit 100 weist wie aus Fig. 1b zu entnehmen, einen ersten Verbinder 102a und einen zweiten Verbinder 102b auf. Beide Verbinder 102a, b gemäß der in Fig. 1b gezeigten Ausführungsform sind baugleich und in Fig. 1a im Detail gezeigt. Die nachfolgend der Einfachheit halber für einen Verbinder 102 aufgeführten Merkmale treffen somit sowohl auf den ersten Verbinder 102a als auch auf den zweiten Verbinder 102b gleichermaßen zu, es sei denn es wird ausdrücklich auf Unterschiede hingewiesen.

Sowohl der erste Verbinder 102a als auch der zweite Verbinder 102b weisen einen Fixierabschnitt 106 auf. Der Fixierabschnitt 106 dient der Fixierung der Verbinder 102. Die Fixierung und insbesondere die Verbindung der beiden Werkstücke 104a, b wird noch genauer mit Bezug zu Fig. 2a-c erläutert.

Der Verbinder 102 ist vorzugsweise stiftartig ausgebildet. Ferner erstreckt sich der Fixierabschnitt 106 über maximal die Hälfte der Länge L des Verbinders 102. Vorzugsweise erstreckt sich der Fixierabschnitt 106 über maximal ein Drittel der Länge L und insbesondere über maximal ein Viertel der Länge L des Verbinders 102.

Des Weiteren erstreckt sich der Fixierabschnitt 106 in Umfangsrichtung U über maximal die Hälfte des Gesamtumfangs des Verbinders 102. Vorzugsweise erstreckt sich der Fixierabschnitt 106 in Umfangsrichtung U über maximal ein Drittel und insbesondere über maximal ein Viertel des Gesamtumfangs des Verbinders 102.

Gemäß der in Fig. 1a gezeigten Ausführungsform des Verbinders 102 weise dieser mehrere Fixierelemente 108 auf. Beispielsweise weist der Fixierabschnitt 106 des gezeigten Verbinders 102 sieben Fixierelemente 108 auf. Die Fixierelemente 108 dienen der Fixierung des Verbinders 102 in dem jeweiligen Werkstück 104, wie mit Bezug zu Fig. 2a-c noch näher erläutert wird.

Die Fixierelemente 108 weisen ferner unterschiedliche Längen l und/oder Abstände a zueinander auf. In der in Fig. 1a gezeigten ersten Ausführungsform des Verbinders 102 sind die Fixierelemente als scharfkantige Flanken ausgebildet, die zur Fixierung des Verbinders 102 in dem Werkstück 104 in dieses eingreifen.

Ferner weist der Verbinder 102 an einem Ende 110, das dem Fixierabschnitt 106 in Längsrichtung gegenüber liegt, eine Verjüngung 112 auf. Die Verjüngung 112 ist gemäß dem in Fig. 1a gezeigten Ausführungsbeispiel als Abschrägung ausgebildet.

Der Verbinder 102 weist ebenfalls einen Anschlag 114 auf. Der Anschlag 114 kann, wie in Fig. 1a angedeutet, als zumindest bereichsweise umfangsseitig angeordnete Flanke ausgebildet sein. Alternativ kann der Anschlag 114 jedoch auch als Verdickung ausgebildet sein.

Fig. 1b zeigt das Verbindungskit 100 mit dem ersten Verbinder 102a und dem zweiten Verbinder 102b in einem vormontierten Zustand. Hierbei ist der erste Verbinder 102a in einer Bohrung 116 des ersten Werkstücks 104a angeordnet. Speziell ist der erste Verbinder 102a derart in der Bohrung 116 angeordnet, dass der Fixierabschnitt 106 des ersten Verbinders 102a in der Bohrung 116 angeordnet ist und das Ende 110 aus der Bohrung 116 herausragt. Der erste Verbinder 102a ist somit lediglich bereichsweise in der Bohrung 116 angeordnet.

Korrespondierend hierzu ist der zweite Verbinder 102b angeordnet. Das heißt, dass das Ende 110 des zweiten Verbinders 102b in der Bohrung 116 des ersten Werkstücks 104a angeordnet ist und sich mit dem Teil des ersten Verbinders 102a, der in der Bohrung 116 angeordnet ist, verklemmt. Die Verbinder 102 weisen jeweils eine Anschlagfläche 118 auf, die an der Seite angeordnet ist, die im Querschnitt betrachtet dem Fixierabschnitt 106 gegenüber liegt. Die Anschlagflächen 118 der beiden Verbinder 102 liegen in dem in Fig. 1b gezeigten Zustand aneinander an, sodass sich die beiden Verbinder 102 gegenseitig stützen. Die Anschlagfläche 118 erstreckt sich vorzugsweise über die gesamte Länge L des Verbinders 102. Des Weiteren ist die Anschlagfläche 118, um ein zuverlässiges Anliegen der beiden Verbinder 102 zu gewährleisten, plan.

Des Weiteren weist der erste Verbinder 102a und/oder der zweite Verbinder 102b ein Sicherungselement 120 auf. Das Sicherungselement 120 dient der zusätzlichen Sicherung der Verbindung der beiden Werkstücke 104. Ergänzend hierzu kann das Sicherungselement 120 jedoch mit einem Werkzeug, beispielsweise mit einem Schraubendreher, einfach gelöst werden, um die Verbindung der beiden Werkstücke 104 zu lösen.

Die in Fig. 1b gezeigte perspektivische Darstellung ist in einer Seitenansicht auch in Fig. 2a gezeigt. In dieser ist nochmal der in der Bohrung 116 des ersten Werkstücks 104a einsitzende Fixierbereich 106 des ersten Verbinders 102a gezeigt. Ebenso ist zu erkennen, wie die beiden Verbinder 102 mit ihren Anschlagflächen 118 aneinander anliegen und sich gegenseitig verklemmen.

Um nun das erste Werkstück 104a mit dem zweiten Werkstück 104b zu verbinden, wird das zweite Werkstück 104b wie in Fig. 2b gezeigt so angeordnet, dass der Fixierbereich 106 des zweiten Verbinders 102b sowie das Ende 110 des ersten Verbinders 102a in einer Bohrung 118 des zweiten Werkstücks 104b angeordnet sind, insbesondere einsitzen.

Somit ist der Fixierbereich 106 des ersten Verbinders 102a in der Bohrung des ersten Werkstücks 104a angeordnet und der Fixierbereich 106 des zweiten Verbinders 102b ist in der Bohrung 116 des zweiten Werkstücks 104b angeordnet. Diese spezielle Anordnung ist für den nächsten Schritt des Verbindens von Bedeutung.

Nach dem in Fig. 2b gezeigten Anordnen des zweiten Werkstücks 104b erfolgt ein Zusammendrücken der beiden Werkstücke 104. Alternativ kann auch eines der Werkstücke 104 auf das andere Werkstück 104 gedrückt werden. Durch das Zusammendrücken der beiden Werkstücke 104 gleiten die Verbinder 102 an ihren Anschlagflächen 118 entlang und tiefer in die jeweilige Bohrung 116. Durch die konternde Wirkung der Anschlagflächen 118 werden die Fixierabschnitte 106 und speziell die Fixierelemente 108 in Fig. 2c in das jeweilige Werkstück 104 gedrückt und bilden dort eine Fixierung aus. Nach dem vollständigen Zusammendrücken der beiden Werkstücke 104, sodass zwischen diesen vorzugsweise kein Spalt mehr ausgebildet ist. Ist eine zuverlässige und einfache Verbindung dieser beiden Werkstücke 104 hergestellt, die erfindungsgemäß durch die Fixierelemente und das gegenseitige Kontern der beiden Verbinder 102 realisiert wird. Es kann somit vorzugsweise auf den Einsatz von Werkzeug verzichtet werden, da durch die entsprechende Geometrie der Verbinder 102 weniger Kraft ausgeübt werden muss als bei bereits bekannten Verbindern bzw. Verbindungskits.

Um die Presspassung der beiden Verbinder 102 innerhalb der Bohrungen 116 noch zu steigern, weisen die Verbinder 102 vorzugsweise einen Gesamtdurchmesser D auf, der der um 0,1mm bis 0,3mm, insbesondere um 0,2mm größer ist als ein Durchmesser der jeweiligen Bohrungen 116 der Werkstücke 104.

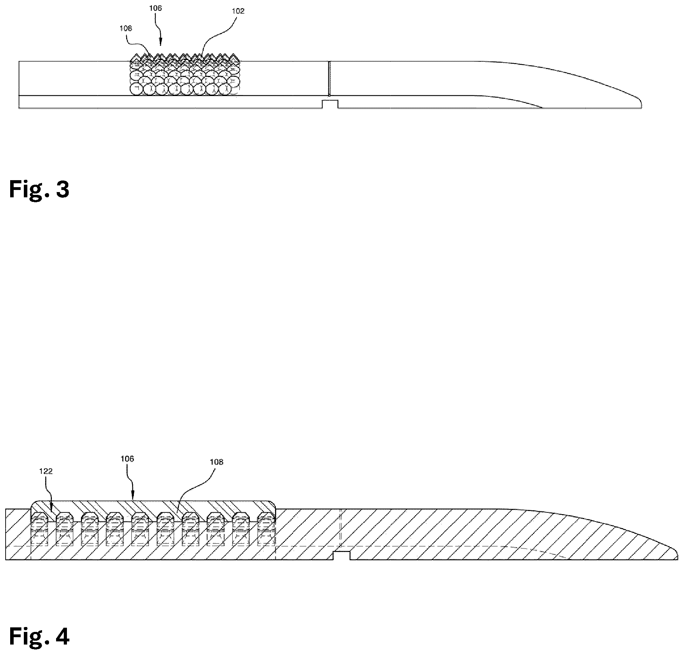

In der Fig. 3 ist eine Seitenansicht eines Fixierabschnitts 106 eines Verbinders 102 im Detail gezeigt. Diese Darstellung zeigt eine zweite Ausführungsform des Fixierabschnitts 106 und insbesondere der Fixierelemente 108. Die Fixierelemente 108 gemäß der in Fig. 3 gezeigten Ausführungsform sind als Dornen ausgebildet. Dies ist eine zuverlässige Alternative zu den in den Fig. 1 und 2 gezeigten scharfkantigen Flanken. Beide Ausgestaltungen eignen sich vorzugsweise, wenn es sich bei zumindest einem der beiden Werkstücke 104 um ein Werkstück 104 aus Holz handelt. Die Flanken und/oder die Dornen könne sich dann beim Zusammendrücken der beiden Werkstücke 104 in das Holz drücken und dort eine Fixierung herstellen.

In der Fig. 4 ist eine Seitenansicht eines weiteren alternativen Fixierabschnitts 106 und insbesondere einer alternativen Ausführungsform der Fixierelemente 108 gezeigt. In dieser dritten Ausführungsform ist als Fixierelement 108 ein Gummielement auf. Das als Gummielement ausgebildete Fixierelement 106 eignet sich besonders, wenn es sich bei dem zu verbindenden Werkstück 104 um ein Werkstück 104 aus Beton oder Metall handelt, bei dem ein Eindringen der Fixierelemente 108, wie bei dem Werkstück 104 aus Holz, aufgrund der Härte des Materials schwierig ist. Das Gummielement bietet hierbei jedoch dennoch eine zuverlässige Fixierung des Verbinders 102 innerhalb der Bohrung 116. Weiterhin zusätzlich, jedoch optional, weist der Fixierabschnitt 106 eine Aussparung 122 auf, in die das als Gummielement ausgebildete Fixierelement 108 eingesetzt ist. Diese optionale Weiterbildung ermöglicht es ein größeres Fixierelement 108 heranzuziehen, welches eine größere Fixierwirkung aufweist.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung kann im Rahmen der Ansprüche und unter Berücksichtigung der Kenntnisse des zuständigen Fachmanns variiert werden.

### Bezugszeichenliste

- 100: Verbindungskit
- 102a: erster Verbinder
- 102b: zweiter Verbinder
- 104a: erstes Werkstück
- 104b: zweites Werkstück
- 106: Fixierabschnitt
- 108: Fixierelemente
- 110: Ende des Verbinders
- 112: Verjüngung
- 114: Anschlag
- 116: Bohrung
- 118: Anschlagfläche
- 120: Sicherungselement
- 122: Aussparung

- D: Gesamtdurchmesser
- L: Länge des Verbinders
- l: Länge des Fixierelements
- a: Abstand zweier Fixierelemente zueinander
- U: Umfangsrichtung des Verbinders

## Patentansprüche

1. Verbindungskit (100) zum Verbinden eines ersten Werkstücks (104a) mit einem zweiten Werkstück (104b), mit einem ersten Verbinder (102a) und einem zweiten Verbinder (102b), wobei der erste Verbinder (102a) und der zweite Verbinder (102b) jeweils einen Fixierabschnitt (106) zum Fixieren der Verbinder (102a, 102b) aufweisen und die Verbinder (102a, 102b) zumindest bereichsweise in jeweils einer Bohrung (116) der Werkstücke (104a, 104b) angeordnet sind, wobei ferner der Fixierabschnitt (106) des ersten Verbinders (102a) in einer Bohrung (116) des ersten Werkstücks (104a) angeordnet ist und der Fixierabschnitt (106) des zweiten Verbinders (102b) in einer Bohrung (116) des zweiten Werkstücks (104b) angeordnet ist und die Verbinder (102a, 102b) gegenseitig verklemmt sind.

2. Verbindungskit (100) nach Anspruch 1, wobei sich der Fixierabschnitt (106) über maximal die Hälfte der Länge (L) des jeweiligen Verbinders (102a, 102b) erstreckt.

3. Verbindungskit (100) nach Anspruch 1 oder 2, wobei sich der Fixierabschnitt (106) in Umfangsrichtung (U) über maximal die Hälfte des Gesamtumfangs des jeweiligen Verbinders (102a, 102b) erstreckt.

4. Verbindungskit (100) nach einem der vorhergehenden Ansprüche, wobei der erste Verbinder (102a) und der zweite Verbinder (102b) jeweils eine Anschlagfläche (118), insbesondere eine plane Anschlagfläche (118), aufweisen, wobei die Anschlagflächen (118) der Verbinder (102a, 102b) aneinander anliegen, um die Verbinder (102a, 102b) in den Bohrungen (116) zu verklemmen.

5. Verbindungskit (100) nach Anspruch 4, wobei die beiden aneinander anliegenden Verbinder (102a, 102b) einen Gesamtdurchmesser (D) aufweisen, der um 0,1mm bis 0,3mm, insbesondere um 0,2mm größer ist als ein Durchmesser der jeweiligen Bohrungen (116) der Werkstücke (104a, 104b).

6. Verbindungskit (100) nach einem der vorhergehenden Ansprüche, wobei der Fixierabschnitt (106) mehrere Fixierelemente (108) aufweist.

7. Verbindungskit (100) nach Anspruch 6, wobei die mehreren Fixierelemente (108) unterschiedliche Längen (l) und/oder Abstände (a) zueinander aufweisen.

8. Verbindungskit (100) nach Anspruch 6 oder 7, wobei die Fixierelemente (108) als scharfkantige Flanken und/oder als Dornen ausgebildet sind.

9. Verbindungskit (100) nach einem der vorhergehenden Ansprüche, wobei der Fixierabschnitt (106) eine Beschichtung, insbesondere eine Gummi- und/oder Polyurethan-Beschichtung aufweist.

10. Verbindungskit (100) nach einem der vorhergehenden Ansprüche, wobei der erste Verbinder (102a) und der zweite Verbinder (102b) jeweils einen Anschlag (114) aufweisen, um eine Eindringtiefe in die Bohrungen (116) zu begrenzen.

11. Verbindungskit (100) nach einem der vorhergehenden Ansprüche, wobei der erste Verbinder (102a) und/oder der zweite Verbinder (102b) ein Sicherungselement (120) aufweisen bzw. aufweist.

12. Verbindungskit (100) nach einem der vorhergehenden Ansprüche, wobei der erste Verbinder (102a) und/oder der zweite Verbinder (102b) an einem Ende (110), das dem Fixierabschnitt (106) in Längsrichtung gegenüber liegt, eine Verjüngung (112) aufweist.

13. Verbindungskit (100) nach einem der vorhergehenden Ansprüche, wobei der erste Verbinder (102a) und/oder der zweite Verbinder (102b) ein Metall aufweisen, insbesondere aus einem Metall hergestellt sind.

14. Verfahren zum Verbinden eines ersten Werkstücks (104a) mit einem zweiten Werkstück (104b) mittels eines Verbindungkits (100) gemäß einem der vorhergehenden Ansprüche, das Verfahren aufweisend die Schritte:
a) Versehen des ersten Werkstücks (104a) und des zweiten Werkstücks (104b) mit jeweils einer Bohrung (116);
b) Einlegen eines ersten Verbinders (102a) in die Bohrung (116) des ersten Werkstücks (104a), wobei ein Fixierabschnitt (106) des ersten Verbinders (102a) in der Bohrung (116) angeordnet wird;
c) Anordnen eines zweiten Verbinders (102b) in der Bohrung (116) des ersten Werkstücks (104a) derart, dass eine Anschlagfläche (118) des zweiten Verbinders (102b) und eine Anschlagfläche (118) des ersten Verbinders (102a) aneinander anliegen;
d) Anordnen des zweiten Werkstücks (104b) auf dem ersten Verbinder (102a) sowie dem zweiten Verbinder (102b) derart, dass ein Fixierabschnitt (106) des zweiten Verbinders (102b) in der Bohrung (116) des zweiten Werkstücks (104b) angeordnet wird;
e) Zusammendrücken der beiden Werkstücke (104a, 104b), so dass durch die innerhalb der Bohrungen (116) angeordneten Fixierabschnitte (106) und das Anliegen der Anschlagflächen (118) eine Klemmpassung zur Fixierung der beiden Werkstücke (104a, 104b) miteinander ausgebildet wird.

15. Verfahren nach Anspruch 11, wobei Schritt e) unter Zuhilfenahme eines Kraftverstärkers ausgeführt wird.
